# FASCICULE DE BREVET EUROPEEN

(11) **EP 0 418 178 B1**
(45) Date de publication et mention de la délivrance du brevet: **02.06.1993**
(21) Numéro de dépôt: 90440079.3
(22) Date de dépôt: 12.09.1990
(51) Int. Cl.: B60P 3/08

(54) **Unité supérieure porte-voiture pour véhicule routier**
Oberfahrzeugladeeinheit für Transportfahrzeug
Upper vehicle-carrying unit for road transporter

(30) Priorité: 12.09.1989 FR 8912079
(43) Date de publication de la demande: 20.03.1991
(73) Titulaire: LOHR INDUSTRIE, 67980 Hangenbieten (FR)
(72) Inventeur: Andre, Jean-Luc, F-67210 Obernai (FR)
(74) Mandataire: Metz, Paul

(56) Documents cités:
- EP-A- 0 345 187
- FR-A- 2 290 325
- GB-A- 931 790
- US-A- 3 084 970
- US-A- 4 081 196

## Description

La présente invention se rapporte à une unité supérieure porte-voiture pour véhicule routier.

Elle se rapporte plus particulièrement à une unité supérieure comprenant un plateau mobile entre une position inférieure escamotée derrière la cabine utilisée pour le roulage à vide ou le chargement et une position supérieure utilisée pour le transport dans laquelle le plateau porteur la composant se trouve en configuration d'extension en porte-à-faux au-dessus de la cabine.

Afin d'augmenter la capacité des véhicules porte-voitures routiers, les constructeurs ont ajouté aux divers plateaux porteurs une plate-forme fixe ou inclinable en saillie au-dessus de la cabine du camion porteur-remorqueur.

Cette plate-forme réalise le plateau porteur de la voiture d'extrémité placée la plus haute. Elle constitue l'extrémité d'une rampe utilisée pour le chargement formée par la succession linéaire de divers plateaux intermédiaires.

Cette rampe permet au véhicule à transporter en position haute d'extrémité avant d'accéder à la plate-forme supérieure et inversement de la quitter lors du déchargement.

On connaît également des réalisations américaines équivalentes mettant en oeuvre un ou deux couples de vérins soutenant un plateau porteur avant disposé au-dessus de la cabine. Deux de ces réalisations sont décrites dans les brevets américains n° 3,084,970 au nom de Raymond DAY et n° 4,081,196 au nom d'Emest DANDRIDGE.

Ces moyens n'ont que pour simple but d'incliner plus ou moins le plateau de manière à adapter l'inclinaison de la voiture pour mieux imbriquer les voitures les unes par rapport aux autres.

Une réalisation selon les caractéristiques du préambule de la présente revendication 1 est connue du document EP-A-0 345 187 qui a été publié après la date de dépôt de la presente invention.

Or, pour des raisons d'aérodynamisme, de rapidité, de facilité de chargement et pour des raisons de sécurité du travail qui nécessitent des protections mécaniques pour les travaux exécutés en hauteur, le caractère pratiquement fixe par rapport au sol de cette plate-forme supérieure apparaît peu compatible avec les impératifs de rendement et les considérations générales d'économie.

Par ailleurs, le degré élevé de pente de la rampe de chargement provoque une usure prématurée des embrayages des voitures placées en position haute.

La présente invention a pour but de remplacer cette plate-forme fixe par un plateau mobile entre une position inférieure escamotée de roulage à vide et de chargement, et une position haute d'extension utilisée pour le transport en position supérieure haute.

Elle se rapporte plus particulièrement à une unité supérieure porte-voiture pour camion porte-voitures à carrosserie fixe ou déposable, soutenue par un portique formé de deux poteaux renfermant chacun un mécanisme de levage, caractérisée en ce qu'elle possède un plateau composite mobile entre une position inférieure escamotée de roulage à vide et de chargement et une position d'extension supérieure pour le transport, ledit plateau composite comprenant des moyens de coulissement par rapport aux poteaux et des moyens de formation d'une ouverture à travers le plateau destinée au passage en saillie, à travers le plateau de la partie supérieure de la cabine, lorsque le plateau est en position supérieure.

La présente invention offre plusieurs avantages caractéristiques tels que ceux cités à titre d'exemple ci-après :
. facilité et rapidité de chargement ;
. travaux de calage et d'arrimage à faible hauteur ne nécessitant pas de protection particulière ;
. gain en hauteur totale de chargement par utilisation de l'ouverture dans le plateau pour le passage de la partie supérieure de la cabine .

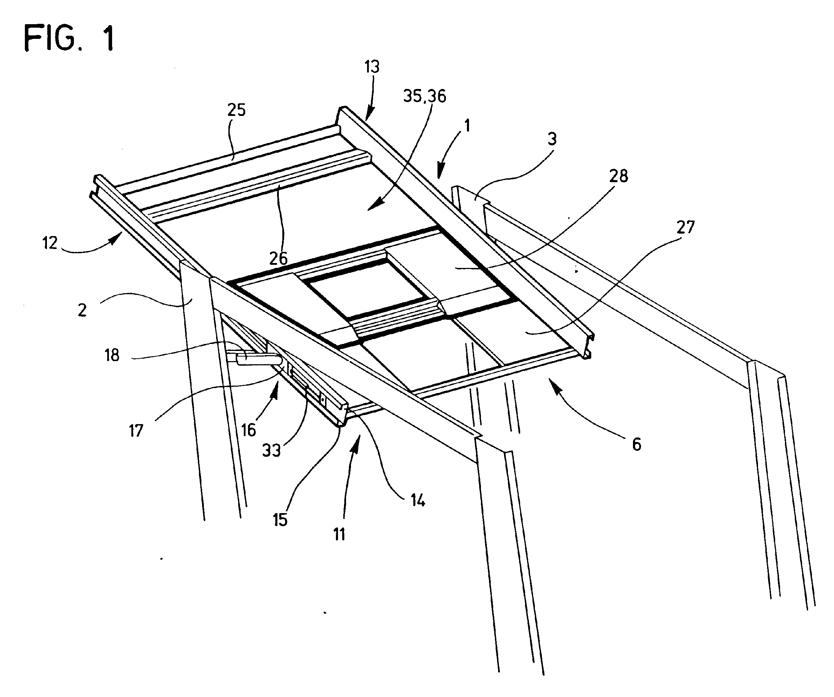

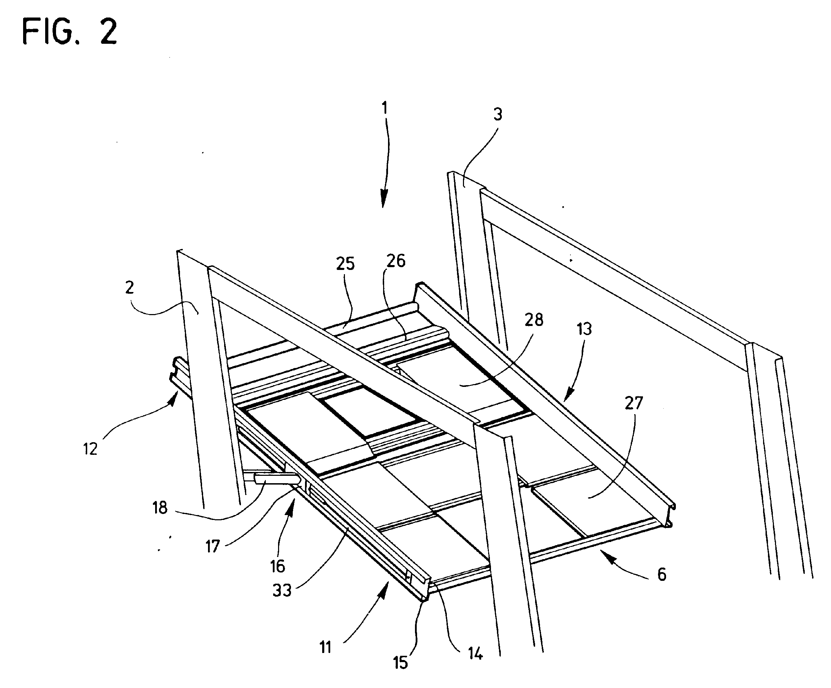

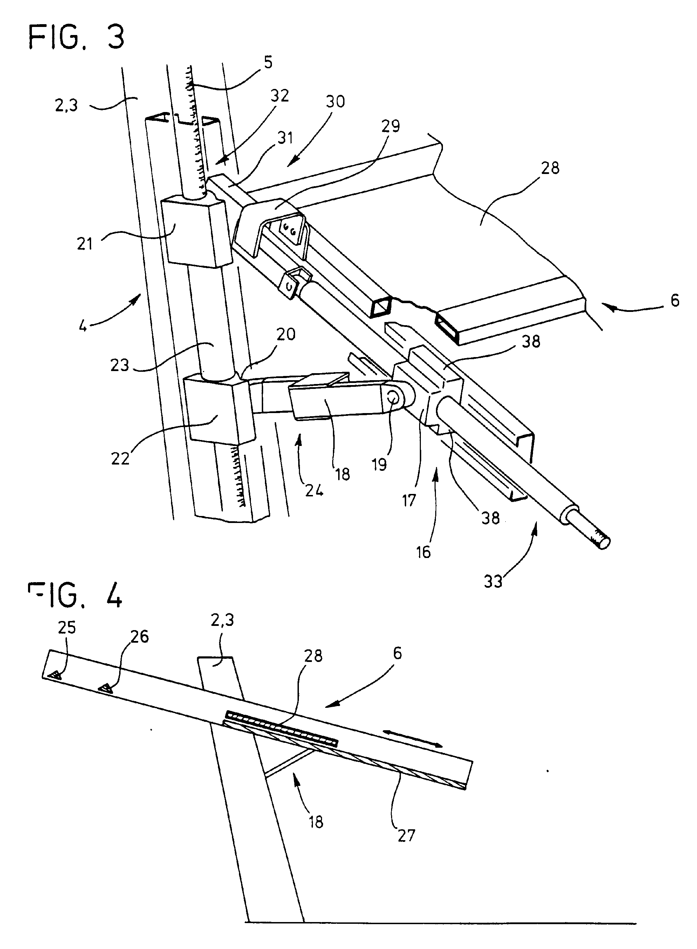

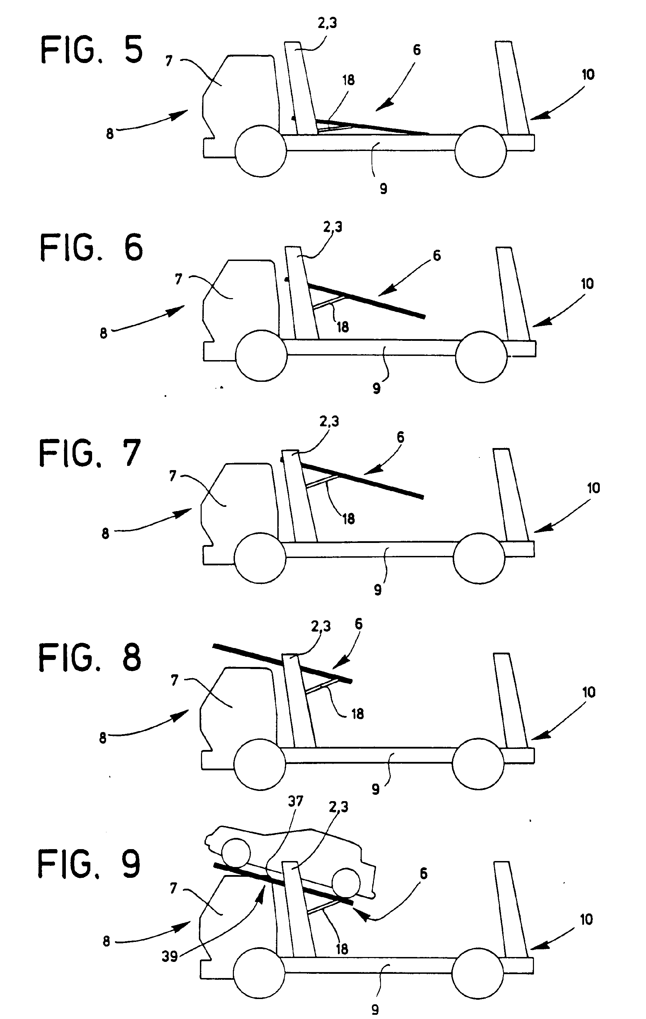

Les caractéristiques techniques et d'autres avantages de l'invention sont consignés dans la description qui suit, effectuée à titre d'exemple sur un mode d'exécution en référence aux dessins accompagnants dans lesquels :
. la figure 1 est une vue générale en perspective simplifiée de l'unité supérieure porte-voitures montrant le plateau porteur en position de retrait, passage ouvert ;
. la figure 2 est une vue générale de profil montrant le plateau porteur en position d'extension, passage fermé;
. la figure 3 est une vue de détail en perspective montrant le mécanisme de manoeuvre du plateau ;
. la figure 4 est une vue générale de profil, plateau en position d'extension ;
. les figures 5 à 9 sont des schémas illustratifs des différentes phases et configurations de chargement.

L'unité supérieure selon la présente invention comporte un plateau mobile monté au-dessus de la cabine d'un camion porteur-remorqueur équipé d'une structure porte-voitures solidaire du châssis ou déposable.

De façon plus générale, elle peut être utilisée avec tous les types existants de structures porte-voitures.

L'unité supérieure porte-voitures selon l'invention comprend un portique 1 formé de deux poteaux 2 et 3, renfermant chacun un dispositif de levage 4, par exemple à vis telle que 5.

Ces vis 5 soutiennent de chaque côté, par une articulation appropriée, un plateau porteur composite 6 mobile verticalement et longitudinalement en translation par rapport aux poteaux entre une position inférieure escamotée et une position haute d'extension au-dessus d'une cabine 7 d'un camion 8.

Les poteaux 3 et 4 sont montés sur un châssis 9 de camion 8 à proximité de sa cabine 7. Ils font partie d'une carrosserie porte-voitures 10 portée par le camion 8.

Comme déjà indiqué, selon le cas, la carrosserie porte-voitures est désolidarisable du châssis de camion et constitue alors une carrosserie déposable.

Le plateau mobile 6 équipant l'unité supérieure porte-voitures selon l'invention comporte une structure sous la forme d'un cadre 11 présentant deux longerons 12 et 13 équipés chacun de moyens ou de surfaces de coulissement, par exemple des profilés adaptés ou des glissières 14 et 15 en regard, coopérant avec un coulisseau 16 par exemple sous la forme d'un patin 17 relié au dispositif de relevage par une liaison articulée inclinée 18 dont chacune des extrémités porte des articulations 19 et 20 respectivement côté plateau et côté vis.

Dans la variante représentée, les articulations 19 et 20 sont montées sur des douilles supérieure 21 et inférieure 22 reliées mécaniquement entre elles par un tube 23 dont l'une au moins est filetée et en prise avec la vis.

Un système équivalent comporte deux douilles filetées sans liaison mécanique entre elles.

La liaison articulée inclinée 18 est, par exemple, de longueur fixe, sous la forme d'une bielle 24 ou de longueur variable sous la forme par exemple d'une bielle télescopique (non représentée) ou de tout autre moyen équivalent, de manière à permettre toutes les compositions de mouvements.

Le cadre 11 est fermé à l'avant par des barres transversales d'extrémités 25 et 26 et comporte un platelage-support 27 solidaire des longerons, déplaçable avec le plateau.

Ce platelage-support 27 est ainsi mobile et est appelé ci-après platelage mobile.

Un platelage fixe 28 est monté solidaire par une patte 29 d'un deuxième coulisseau 30 sous la forme d'un patin 31 relié de chaque côté par une articulation de pivotement-glissement 32 à la douille supérieure 21 filetée ou non.

Les platelage mobile 27 et fixe 28 sont disposés à des niveaux horizontaux différents, de manière à pouvoir se croiser librement. Ils sont représentés par des traits d'épaisseurs différentes.

Le plateau est mobile par l'intermédiaire de ses longerons 12 et 13 par appui-support de coulissement sur les patins 17 et 31 au droit de chacun des poteaux par appui sur les articulations 32 de pivotement-glissement sur lesquelles portent à coulissement les longerons 13, par exemple sous la forme de structures adaptées pour coulisser, prévues dans les ou par les formes des profilés des longerons.

Dans un mode de réalisation, les articulations 20 et 32 constituent avec le coulisseau respectif un même bloc mécanique. Il s'agit alors d'articulations coulissantes.

L'ensemble du plateau est monté mobile en translation sous l'effet d'un vérin de translation 33 monté chacun le long ou dans un longeron relié d'un côté au coulisseau 16 et de l'autre, à l'extrémité du longeron côté arrière du camion.

Les mouvements d'extensions et de retrait des vérins de translation 33 permettent ainsi la translation du plateau d'un côté ou de l'autre des poteaux.

Ces mouvements de translation du plateau associés aux mouvements d'élévation le long des poteaux assurent, dans la variante représentée, un déplacement du plateau à inclinaison fixe suffisant pour remplir la fonction générale de l'invention concernant le déplacement d'un véhicule depuis une position basse en continuité du plan inférieur de roulage jusqu'à une position haute de transport en extension de porte-à-faux au-dessus de la cabine.

Selon une caractéristique originale de l'invention, le plateau mobile présente à l'avant un réceptacle-calage pour les roues avant du véhicule, formé par les deux barres transversales d'extrémité 25 et 26 servant aussi de traverses au cadre. Le plateau présente ensuite, en position d'extension, entre le réceptacle et le platelage fixe, une ouverture 35 servant de passage 36 traversé par la partie supérieure arrière 37 de la cabine 7.

La surface utile de ce passage 36 dépend de la position du platelage fixe par rapport au cadre mobile. En effet, plus le plateau se déplace vers l'arrière, plus le platelage fixe vient obturer l'ouverture du passage pour le fermer complètement en position de retrait maximal, c'est-à-dire en position extrême arrière.

Et inversement, l'ouverture de passage se dégage lors du mouvement du plateau vers l'avant, transversalement aux poteaux.

Plus particulièrement, comme on peut le voir sur la vue en coupe, (figure 4) les glissières ou surfaces sur lesquelles coulissent les patins sont remplacées par les surfaces inférieures en regard des longerons de section générale en C, constituant les bords longitudinaux du cadre.

Ces surfaces de coulissement coopèrent avec des formes adaptées des patins, comme par exemple des épaulements tels que 38.

On peut aussi envisager de nombreuses autres variantes de formes permettant le même mouvement de coulissement.

De plus, au niveau de la liaison fonctionnelle avec les vis 5 des dispositifs de levage afin de permettre une plus grande variété de mouvements, diverses variantes s'avèrent possibles.

Il s'agit notamment d'une liaison articulée inclinée 18 de longueur variable, par une bielle télescopique ou tout autre système analogue permettant de modifier l'inclinaison du plateau mobile.

De plus, il s'avère tout à fait possible de dissocier mécaniquement les deux articulations 32 et 20 solidaires de chaque douille 21 et 22 en prise sur chaque vis 5 ou de prévoir l'une ou l'autre articulation de pivotement-glissement 32 ou 20 ou les deux, en prise avec la vis 5 par un ou deux écrous débrayables.

Ainsi, chaque articulation devient indépendante et la distance entre elles peut varier si elles sont solidaires d'écrous débrayables en vue de réaliser le déplacement du plateau par la composition de divers mouvements de base.

En référence aux figures de 5 à 9, l'unité supérieure porte-voitures selon l'invention fonctionne de la façon suivante.

Avant son chargement, le plateau mobile se trouve en position inférieure après un roulage à vide ou un stationnement sur une aire d'attente.

Le plateau repose, ouverture de passage fermée, sur la base-châssis de la carrosserie porte-voitures.

La voiture destinée à être transportée est conduite jusqu'à son emplacement sur le plateau, en roulant sur le plan de chargement inférieur qui constitue un plan de roulement approximativement plat et horizontal.

La commande de levage sur les vis des poteaux permet d'élever le plateau.

On procède ensuite, selon la variante représentée en cours de levage ou en fin de levage, à l'ajustement en inclinaison par le déplacement du coulisseau de la liaison articulée inclinée 18.

En fin de course haute et en position inclinée semi-définitive, le plateau porteur est déplacé longitudinalement vers l'avant transversalement aux poteaux par coulissement de ses longerons 12 et 13 sur les patins d'articulations 17 et 31 par l'action motrice des vérins de translation.

Cette translation est une projection vers l'avant dans la position supérieure de transport.

Lors de ce mouvement, les platelages mobile et fixe se rapprochent jusqu'à se chevaucher, créant ainsi une ouverture de passage utilisée pour le haut de la cabine 7 qui vient pénétrer dans cet évidement et occuper le volume disponible 39 au travers du plateau et dans l'empattement de la voiture transportée.

L'inclinaison définitive du plateau porteur permet à la cabine de pénétrer dans le volume disponible 39 lors de la solidarisation de la carrosserie porte-voitures déposable.

Dans le cas d'une carrosserie porte-voitures fixe, le mouvement de translation doit s'effectuer dans une inclinaison légèrement plus importante pour être ajustée ensuite vers le bas afin de rester dans le gabarit routier autorisé.

L'invention a été décrite ci-dessus en détail. Il est bien entendu cependant que diverses modifications simples, adjonctions, variantes directes, substitutions par des moyens équivalents entrent dans le cadre de la présente protection, comme définie dans les revendications suivantes.

## Revendications

1. Unité supérieure porte-voiture pour camion porte-voitures à carrosserie fixe ou déposable, soutenue par un portique formé de deux poteaux renfermant un mécanisme de levage, caractérisée en ce qu'elle possède un plateau composite mobile entre une position inférieure escamotée de roulage à vide et de chargement et une position d'extension supérieure pour le transport, ledit plateau composite comprenant des moyens de coulissement par rapport aux poteaux et des moyens de formation d'un passage à travers le plateau pour le dépassement en saillie à travers le plateau de la partie supérieure de la cabine en position supérieure utilisée pour le transport.

2. Unité supérieure porte-voiture selon la revendication 1, caractérisée en ce que le plateau composite mobile est articulé à pivotement, d'une part sur des articulations de poteaux en regard mobiles le long de chaque dispositif de levage de chaque poteau et, d'autre part, sur des articulations en regard, mobiles le long des longerons et rappelées mécaniquement sur chaque dispositif de levage de chaque poteau par une liaison articulée inclinée.

3. Unité selon les revendications 1 et 2, caractérisée en ce que les dispositifs de levage prévus dans chaque poteau sont des vis.

4. Unité selon les revendications précédentes, caractérisée en ce que le déplacement longitudinal du plateau s'effectue par coulissement de ses longerons sur des coulisseaux d'articulation formés dans le bloc de l'articulation.

5. Unité selon la revendication 4, caractérisée en ce que les longerons affectent une forme de profil en C pour coulisser sur les coulisseaux d'articulation.

6. Unité selon l'une quelconque des revendications précédentes, caractérisée en ce que le plateau possède un platelage fixe, solidaire des longerons et un platelage mobile, solidaire des coulisseaux.

7. Unité selon la revendication 6, caractérisée en ce que le plateau mobile comporte un vérin monté entre sa traverse arrière et le platelage mobile, en vue du déplacement longitudinal du plateau.

## Patentansprüche

1. Oberfahrzeugladeeinheit für Autotransporter mit starrer oder abstellbarer Karosserie, gehalten von einem Balkengerüst, das aus zwei Pfosten besteht, die einen Hubmechanismus enthalten,
**dadurch gekennzeichnet,** daß sie eine zusammengesetzte Ladefläche hat, die zwischen einer unteren eingeklappten Stellung für Leerverkehr und für das Aufladen und einer ausgefahrenen oberen Stellung für den Transport bewegbar ist, wobei die zusammengesetzte Ladefläche Einrichtungen zum Gleiten quer zu den Pfosten aufweist sowie Einrichtungen zur Bildung eines Durchganges durch die Ladefläche zum Unterbringen des oberen Teils des Führerhauses in der Ladefläche, bei der für den Transport benutzten oberen Stellung.

2. Oberfahrzeugladeeinheit nach Anspruch 1,
**dadurch gekennzeichnet,** daß die zusammengesetzte bewegliche Ladefläche schwenkbar angelenkt ist, einerseits an den einander gegenüberstehenden Pfostengelenken, die entlang jeder Hubvorrichtung jedes Pfostens beweglich sind und andererseits an den einander gegenüberstehenden Gelenken, die entlang der Längsholme beweglich sind und die mechanisch zu jeder Hubvorrichtung jedes Pfostens durch eine schräge, angelenkte Verbindung zurückgeführt sind.

3. Einheit nach den Ansprüchen 1 und 2,
**dadurch gekennzeichnet,** daß die in jedem Pfosten vorgesehenen Hubvorrichtungen Schraubenspindeln sind.

4. Einheit nach den vorhergehenden Ansprüchen,
**dadurch gekennzeichnet,** daß man die Längsverschiebung der Ladefläche durch Gleiten ihrer Längsholme auf Gelenkgleitstellen bewerkstelligt, die an den Gelenkblock angeformt sind.

5. Einheit nach Anspruch 4,
**dadurch gekennzeichnet,** daß die Längsholme zum Gleiten auf den Gelenkgleitstellen ein C-förmiges Profil haben.

6. Einheit nach irgend einem der vorhergehenden Ansprüche,
**dadurch gekennzeichnet,** daß die Ladefläche einen feststehenden Bodenbelag hat, der mit den Längsholmen fest verbunden ist und einen beweglichen Bodenbelag, der mit den Gleitstücken fest verbunden ist.

7. Einheit nach Anspruch 6,
**dadurch gekennzeichnet,** daß die bewegliche Ladefläche einen zwischen ihrer hinteren Traverse und dem beweglichen Bodenbelag eingebauten Arbeitszylinder aufweist, der zur Längsverschiebung der Ladefläche dient.

## Claims

1. Upper car-carrying unit for a car transporter having a fixed or removable body, the said unit being supported by a frame formed by two posts comprising a lifting mechanism, characterised in that it has a composite platform which can move between a lower retracted position for travelling unladen and for loading and an upper extended position for transportation, the said composite platform comprising means for sliding relative to the posts and means for forming a passage through the platform for the upper part of the cabin to project through the platform in the upper position used for transportation.

2. Upper car-carrying unit according to claim 1, characterised in that the mobile composite platform is jointed for pivoting, on the one hand on opposite post joints which can move along each lifting device of each post and, on the other hand, on opposite joints which can move along side bars and are returned mechanically on each lifting device of each post by a sloping jointed connection.

3. Unit according to claims 1 and 2, characterised in that the lifting devices provided in each post are screws.

4. Unit according to the preceding claims, characterised in that the longitudinal displacement of the platform takes place by the sliding of its side bars on joint sliders formed in the joint block.

5. Unit according to claim 4, characterised in that the side bars have a C-shaped profile in order to slide on the joint sliders.

6. Unit according to any one of the preceding claims, characterised in that the platform has a fixed flooring solidly attached to the side bars and a mobile flooring solidly attached to the sliders.

7. Unit according to claim 6, characterised in that the mobile platform comprises a jack mounted between its rear cross piece and the mobile flooring, for the purpose of the longitudinal displacement of the platform.
